# EUROPÄISCHE PATENTSCHRIFT

(11) **EP 0 540 917 B1**
(45) Veröffentlichungstag und Bekanntmachung des Hinweises auf die Patenterteilung: **08.03.1995**
(21) Anmeldenummer: 92117678.0
(22) Anmeldetag: 16.10.1992
(51) Int. Cl.: A22C 25/17

(54) **Vorrichtung zum Enthäuten von Fischfilets**
Device for skinning fish fillets
Dispositif à enlever la peau des filets de poissons

(30) Priorität: 06.11.1991 DE 4136459
(43) Veröffentlichungstag der Anmeldung: 12.05.1993
(73) Patentinhaber: NORDISCHER MASCHINENBAU RUD. BAADER GMBH + CO KG, 23560 Lübeck (DE)
(72) Erfinder: Braeger, Horst, W-2400 Lübeck (DE)

(56) Entgegenhaltungen:
- DE-A- 2 118 164
- DE-C- 3 700 324
- FR-A- 1 092 743
- FR-A- 2 419 026
- FR-A- 2 571 935
- US-A- 3 094 739

## Beschreibung

Die Erfindung geht aus von einer Vorrichtung zum Enthäuten von Fischfilets, mit einer umlaufend angetriebenen Hautmitnehmerwalze, einem Andrückschuh mit einer Andrückfläche, die der Mantelfläche der Hautmitnehmerwalze unter Belassen eines Spaltes gegenüberliegt und einem oszillierend angetriebenen, mit seiner Schneide der Mantelfläche der Hautmitnehmerwalze mit Abstand gegenüberstehenden Enthäutemesser.

Eine derartige Enthäutevorrichtung ist beispielsweise aus der DE-PS 37 00 324 bekannt. Bei dieser Vorrichtung ist das Enthäutemesser in einem Schlitz des Andrückschuhs geführt, wobei die Lage der Schneide im Verhältnis zu der die Andrückfläche einlaufseitig begrenzenden stumpfen Kante des Andrückschuhs durch paßfederförmige Führungselemente bestimmt wird, die in entsprechende Ausnehmungen in dem Enthäutemesser eingreifen und dafür sorgen, daß die Schneide der besagten Kante um ein weniges vorgelagert ist.

Diese speziell für das Enthäuten der Filets von Flachfischen konzipierte Vorrichtung hat sich hervorragend bewährt insofern, als die dieser Spezies eigene, durch feine Sehnen verursachte innige Verbindung der Haut mit dem Muskelfleisch damit problemlos trennbar ist.

Was jedoch die erzielbare Ausbeute an Filetfleisch betrifft, so zeigt sich bei Anwendung dieses Konzepts ein Nachteil, der sich bereits optisch darin äußert, daß der sogenannte Silberspiegel auf der Hautseite der Filets fehlt. Ursache dafür ist, daß dieses Enthäuteverfahren auf dem Abtrennen einer die Haut mit umfassenden Schicht einheitlicher Stärke beruht, die durch Einstellung vorherbestimmbar ist. Dabei ist unvermeidbar, daß in Bereichen dünnerer Haut eine Fleischschicht und damit der Silberspiegel mit abgetrennt wird.

Bekanntermaßen läßt sich der Silberspiegel auch bei Filets von Flachfischen mit einem feststehenden Messer bestimmter Schärfe erhalten, doch ist damit kein stabiler Betrieb möglich. Dabei zeigt sich schließlich noch ein weiterer Nachteil, der darin liegt, daß sich der Schwanzbereich längs der Rückgratlinie spaltet, so daß das enthäutete Filet ein schwalbenschwanzförmiges Aussehen erhält, was als Qualitätsbeeinträchtigung gilt.

Es ist die Aufgabe der Erfindung, eine Vorrichtung anzugeben, mittels welcher es möglich ist, Flachfischfilets unter Erhalt des Silberspiegels zu enthäuten und dabei sicherzustellen, daß eine Spaltung des Schwanzbereiches unterbleibt.

Diese Aufgabe wird erfindungsgemäß durch eine Vorrichtung der eingangs genannten Art gelöst, welche dadurch gekennzeichnet ist, daß das einlaufseitige Ende der Andrückfläche als Schneidkante ausgebildet ist, und daß diese sowie die Schneide des Enthäutemessers relativ zueinander derart verlagerbar sind, daß in einer Endstellung die Schneide der Schneidkante und in einer anderen Endstellung die letztere der Schneide vorgelagert ist. Nach einer bevorzugten Ausführung kann dies dadurch erreicht werden, daß der Andrückschuh um die Umlaufachse der Hautmitnehmerwalze über einen einstellbaren Schwenkwinkel schwenkbar gelagert ist, und daß das Enthäutemesser als in einem Führungsschlitz des Andrückschuhs geführte Klinge mit Längsausnehmungen ausgebildet ist, in welche Führungsmittel eingreifen.

Dabei können die Führungsmittel an Haltearmen befestigt sein, die je in einer dem Andrückschuh fest zugeordneten Gleitführung in der Ebene des Enthäutemessers gleitfähig geführt sind und mit einer gestellfesten Kurvenbahn in Eingriff stehen.

Die Verschwenkung des Andrückschuhs erfolgt durch klemmschlüssige Mitnahme desselben bei Eintritt der zu entfernenden Haut in den Spalt zwischen der Andrückfläche des Andsrückschuhs und der Mantelfläche der Hautmitnehmerwalze.

Der mit einer solchen Vorrichtung erzielbare positive Effekt kommt zur Geltung, wenn die zu enthäutenden Flachfischfilets mit dem Schwanzende voraus zugeführt werden, und besteht insbesondere darin, daß die Haut in dem eine besonders innige Bindung zwischen Haut und Muskelfleisch aufweisenden Schwanzwurzelbereich unter "ziehendem" Schnitt abgelöst wird, während die übrige Filetfläche mit stehendem Messer enthäutet wird.

Der Übergang von der einen Enthäuteart in die andere erfolgt automatisch und sein Zeitpunkt im Verhältnis zum Anschnitt kann in gewissen Grenzen durch Verändern der Kraft einer Feder variiert werden, die der Mitnahme des Andrückschuhs entgegenwirkt.

Die erfindungsgemäße Enthäutevorrichtung wird nachstehend anhand eines in der Zeichnung dargestellten Ausführungsbeispiels näher erläutert.

Es zeigt
- Fig. 1: eine Teilansicht der Vorrichtung in axonometrischer Ansicht vereinfacht und auf die wesentlichen Teile beschränkt dargestellt,
- Fig. 2: eine ausschnittweise Seitenansicht der Vorrichtung nach Fig. 1 vergrößert und z. T. geschnitten dargestellt mit in Ruhestellung befindlicher Messeranordnung,
- Fig. 3: einen Ausschnitt aus Fig. 2 mit dem oszillierenden Enthäutemesser in rückgezogener Arbeitsstellung.

In einem nicht dargestellten Gestell einer Enthäutemaschine für Fischfilets sind die ablaufseitige Umlenkwalze 2 eines endlosen Zuführbandes 1 sowie eine Hautmitnehmerwalze 3 gelagert und in geeigneter Weise gleichsinnig umlaufend angetrieben . Die Hautmitnehmerwalze 3 ist an ihrer Mantelfläche 4 in bekannter Weise mit Längsnuten 5 versehen. Der Mantelfläche 4 der Hautmitnehmerwalze 3 ist im Bereich ihrer ablaufenden Seite ein Andrückschuh 6 mit einer Andrückfläche 7 unter Belassen eines Spaltes 8 gegenübergestellt, deren Krümmungradius im wesentlichen dem der Mantelfläche 4 der Enthäutewalze 3 entspricht. Der sich über die ganze Länge der letztgenannten erstreckende Andrückschuh 6 ist um die Umlaufachse 9 der Hautmitnehmerwalze 3 schwenkbar gelagert. Der Schwenkwinkel wird durch einen oberen und einen unteren Anschlag 10 bzw. 11 begrenzt, wobei bezüglich der Federkraft in geeigneter Weise einstellbare Federn 12 bewirken, daß der Andrückschuh 6 an dem oberen Anschlag 10 anliegend gehalten wird.

Der Andrückschuh 6 wird nach oben durch eine Rückenfläche 14 begrenzt, welche sich parallel zu der Mantelfläche 4 der Hautmitnehmerwalze 3 erstreckt und mit dem oberen Endbereich der Andrückfläche 7 eine Schneidkante 13 bildet. Die Rückenfläche 14 trägt eine Abdeckung 15 mit einer Absetzung, die mit der Rückenfläche 14 einen Führungsschlitz 16 zur Führung eines auf geeignete Weise oszillierend angetriebenen Enthäutemessers 17 in Form einer aus Bandstahl gefertigten Messerklinge ausbildet. Diese ist mit einer sich durch eine obere Messerfase 18 ergebenden Schneide 19 versehen. Die Abdeckung 15 ist an ihrem der Hautmitnehmerwalze 3 zuweisenden Teil der Oberfläche ebenfalls mit einer Abfasung 20 ausgestattet, die die Messerfase 18 quasi fortsetzt, so daß das Enthäutemesser 17 mindestens mit seiner Messerfase 18 aus dem Führungsschlitz 16 herausragt. Demgegenüber ist die Schneidkante 13 des Andrückschuhs 6 so vorgezogen, daß sie nur um ein geringes Maß hinter der Schneide 19 des Enthäutemessers 17 zurücksteht. Letzteres wird in der beschriebenen Position gehalten durch Führungsmittel 21, die mittels Führungselementen 2 in langlochartige Ausnehmungen 23 in dem Enthäutemesser 17 greifen, die im Bereich der Enden des Enthäutemessers 17 sich in Längsrichtung desselben erstreckend angeordnet sind. Die Führungselemente 22 sind jeweils an Haltearmen 24 befestigt, die je in einer Gleitführung 25 gleitfähig geführt sind, die jeweils an dem Andrückschuh 6 befestigt ist. Dabei ist die Anordnung der Gleitführungen 25 so getroffen, daß die Haltearme 24 in einer Ebene gleiten können, die parallel zu der Rückenfläche 14 verläuft. Die nach hinten weisenden freien Enden der Haltearme 24 sind je mit einer Kurvenrolle 26 versehen, die jeweils in einer gestellfest angebrachten Kurvenbahn 27 geführt ist.

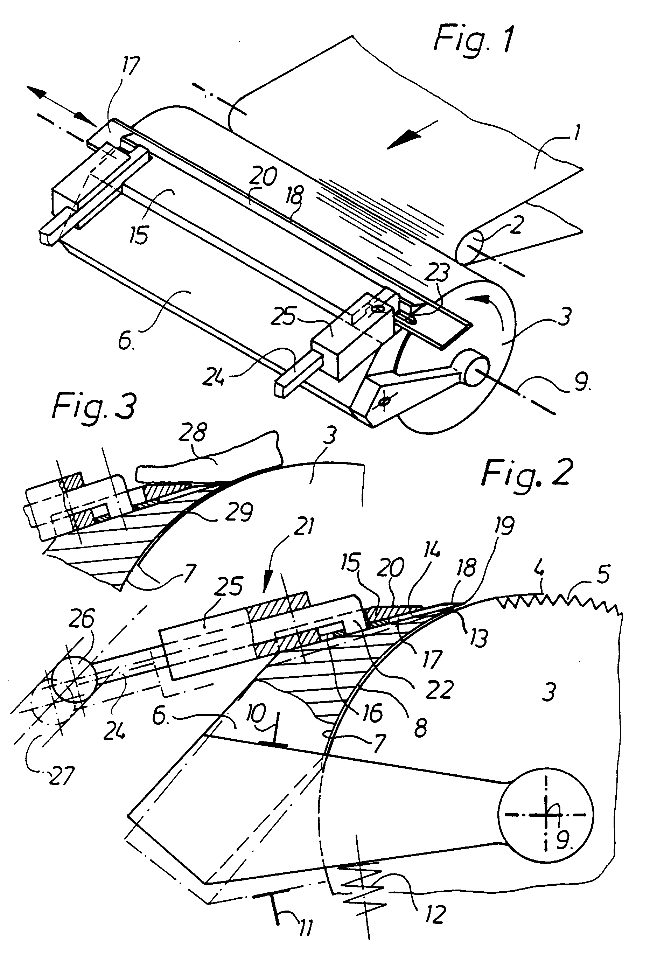

Die Wirkungsweise der Vorrichtung ist folgende: Ein zu enthäutendes Filet 28 wird mit der Hautseite aufliegend und demn Schwanzende voraus mittels des Zuführbandes 1 auf die Mantelfläche 4 der umlaufenden Hautmitnehmerwalze 3 gebracht und von dieser weitergefördert. Dabei lagert sich das Schwanzende in den Längsnuten 5 der Hautmitnehmerwalze 3 ein und gelangt so unter die Schneide 19 des Enthäutemessers 17 und kurz darauf mit den bereits gelösten Teilen der Haut 29 in den Spalt 8 zwischen der Andrückfläche 7 und der Mantelfläche 4 der Hautmitnehmerwalze 3 , was spontan zu einem sicher fördernden Angriff an der jeweils freigeschnittenen Haut 29 führt. Dabei erfährt der Andrückschuh 6 jedoch ein Mitnahmemoment, welches nach Überwindung der Kraft der Feder 12 bewirkt, daß der Andrückschuh 6 in Laufrichtung der Hautmitnehmerwalze 3 um deren Achse 8 schwenkend mitgenommen wird bis der Anschlag 11 , d. h. die in Fig. 2 schwachgezeichnete Stellung erreicht wird. Wie dort auch erkennbar, hat diese Verlagerung des Andrückschuhs 6 zur Folge, daß die das Enthäutemesser 17 in Position haltenden Führungsmittel 21 mit verlagert und dabei durch die an den Haltearmen 24 befestigten Kurvenrollen 26 veranlaßt werden, sich relativ zu der Kurvenbahn 27 zu bewegen. Die daraus resultierende Verlagerung der das Enthäutemesser 17 führenden Führungselemente 22 bewirkt dabei, daß das Enthäutemesser 17 soweit zurückgezogen wird, daß seine Schneide 19 hinter die Schneidkante 12 zurücktritt, so daß diese die weitere Enthäutung übernimmt (Fig. 3). Nach Beendigung des Enthäuteprozesses bzw. nachdem die Haut 29 den Spalt 8 zwischen Andrückfläche 7 und Mantelfläche 4 der Hautmitnehmerwalze 3 verlassen hat, bewirkt die Feder die Rückverlagerung des Andrückschuhs in die Ausgangsstellung.

Der Zeitpunkt des Rückzuges des oszillierenden Enthäutemessers 17 bzw. der Übernahme des Enthäuteprozesses durch die feste Schneidkante 13 kann in gewissen Grenzen durch Verändern der Kraft der Feder 12 bestimmt werden. Dabei kann diesbezüglich eine weitgehende Unabhängigkeit von der Dicke der abzutrennenden Haut 29 dadurch erreicht werden, daß der Andrückschuh 6 in seinen Halterungen in nicht gezeigter üblicher Weise so gelagert ist, daß er gegen Federkraft radial zu der Hautmitnehmerwalze 3 unter Vergrößerung des Spaltes verdrängbar ist.

### Bezugszeichenliste

- 1: Zuführband
- 2: Umlenkwalze
- 3: Hautmitnehmerwalze
- 4: Mantelfläche
- 5: Längsnut
- 6: Andrückschuh
- 7: Andrückfläche
- 8: Spalt
- 9: Umlaufachse
- 10: oberer Anschlag
- 11: unterer Anschlag
- 12: Feder
- 13: Schneidkante
- 14: Rückenfläche
- 15: Abdeckung
- 16: Führungsschlitz
- 17: Enthäutemesser
- 18: Messerfase
- 19: Schneide
- 20: Abfasung
- 21: Führungsmittel
- 22: Führungselement
- 23: Ausnehmung
- 24: Haltzearm
- 25: Gleitführung
- 26: Kurvenrolle
- 27: Kurvenbahn
- 28: Fischfilet
- 29: Haut

## Patentansprüche

1. Vorrichtung zum Enthäuten von Fischfilets, mit einer umlaufend angetriebenen Hautmitnehmerwalze (3) , einem Andrückschuh (6) mit einer Andrückfläche (7) , die der Mantelfläche (4) der Hautmitnehmerwalze (3) unter Belassen eines Spaltes (8) gegenüberliegt und einem oszillierend angetriebenen, mit seiner Schneide (19) der Mantelfläche (4) der Hautmitnehmerwalze (3) mit Abstand gegenüberstehenden Enthäutemesser (17) , **dadurch gekennzeichnet,** daß das einlaufseitige Ende der Andrückfläche (7) als Schneidkante (13) ausgebildet ist, und daß diese sowie die Schneide (19) des Enthäutemessers (17) relativ zueinander derart verlagerbar sind, daß in einer Endstellung die Schneide (19) der Schneidkante (13) und in einer anderen Endstellung die letztere der Schneide (19) vorgelagert ist.

2. Vorrichtung nach Anspruch 1 , **dadurch-gekennzeichnet,** daß der Andrückschuh (6) um die Umlaufachse (9) der Hautmitnehmerwalze (3) über einen einstellbaren Schwenkwinkel schwenkbar gelagert ist, und daß das Enthäutemesser (17) als in einem Führungsschlitz (16) des Andrückschuhs (6) geführte Klinge mit Längsausnehmungen (23) ausgebildet ist, in welche Führungsmittel (21) eingreifen.

3. Vorrichtung nach Anspruch 2 , **dadurch gekennzeichnet,** daß die Führungsmittel (21) an Haltearmen (24) befestigt sind, die je in einer dem Andrückschuh (6) fest zugeordneten Gleitführung (25) in der Ebene des Enthäutemessers (17) gleitfähig geführt sind und mit einer gestellfesten Kurvenbahn (27) in Eingriff stehen.

4. Vorrichtung nach einem der Ansprüche 2 bis 3 , **dadurch gekennzeichnet,** daß die Verschwenkung des Andrückschuhs (6) durch klemmschlüssige Mitnahme desselben bei Eintritt der zu entfernenden Haut in den Spalt (8) zwischen der Andrückfläche (7) des Andrückschuhs (6) und der Mantelfläche (4) der Hautmitnehmerwalze (3) erfolgt.

5. Vorrichtung nach Anspruch 4 , **dadurch-gekennzeichnet,** daß der Andrückschuh (6) gegen die Mitnahmerichtung durch eine einstellbare Feder (12) abgestützt ist.

## Claims

1. Device for skinning fish fillets, comprising a rotationally driven skin entraining roller (3), a presser shoe (6) with a presser surface (7), which lies opposite the circumferential surface (4) of the skin entraining roller (3) while leaving a gap (8), and an oscillatingly driven skinning knife (17) standing by its edge (19) at a spacing opposite the circumferential surface (4) of the skin entraining roller (3), characterised thereby that the end of the presser surface (7) at the entry side is formed as a cutting edge (13) and that this as well as the edge (19) of the skinning knife (17) are displaceable relative to one another in such a manner that in one end setting the edge (19) is disposed in front of the cutting edge (13) and in another end setting the latter is disposed in front of the edge (19).

2. Device according to claim 1, characterised thereby that the presser shoe (6) is mounted to be pivotable about the rotational axis (9) of the skin entraining roller (3) through an adjustable pivot angle and that the skinning knife (17) is constructed as a blade guided in a guide slot (16) of the presser shoe (6) and with longitudinal recesses (23) in which guide means (21) engage.

3. Device according to claim 1, characterised thereby that the guide means (21) are attached to retaining arms (24), which are each slidably guided in the plane of the skinning knife (17) in a slide guide (25) fixedly associated with the presser shoe (25) and which stand in engagement with a cam track (27) fixed relative to the frame.

4. Device according to one of claims 2 to 3, characterised thereby that the pivoting of the presser shoe (6) is effected by clamp-coupling entrainment thereof on entry of the skin, which is to be removed, into the gap (8) between the presser surface (7) of the presser shoe (6) and the circumferential surface (4) of the skin entraining roller (3).

5. Device according to claim 4, characterised thereby that the presser shoe (6) is supported against the entrainment direction by an adjustable spring (12).

## Revendications

1. Dispositif destiné à retirer la peau de filets de poissons, comprenant un rouleau d'entrainement de la peau (3) entraîné en rotation, un patin d'application (6) présentant une surface d'application (7) située en regard de la surface d'enveloppe (4) du rouleau d'entraînement de la peau (3) en laissant libre un interstice (8), et un couteau à retirer la peau (17) entraîné de manière oscillante et dont le tranchant (19) est disposé en regard et à distance de la surface d'enveloppe (4) du rouleau d'entraînement de la peau (3), caractérisé en se que l'extrémité côté entrée de la surface d'application (7) est réalisée sous la forme d'une arête de coupe (13), et en ce que celle-ci ainsi que le tranchant (19) du couteau à retirer la peau (17) peuvent être déplacés l'un par rapport à l'autre de manière telle, que dans une position extrême, le tranchant (19) soit situé en avant de l'arête de coupe (13), et que dans une autre position extrême, cette dernière soit située en avant du tranchant (19).

2. Dispositif selon la revendication 1, caractérisé en ce que le patin d'application (6) est logé de manière à pouvoir pivoter autour de l'axe de rotation (9) du rouleau d'entraînement de la peau (3), d'un angle de pivotement réglable, et en ce que le couteau à retirer la peau (17) est réalisé sous la forme d'une lame, qui est guidée dans une fente de guidage (16) du patin d'application (6), et comporte des évidements longitudinaux (23) dans lesquels s'engagent des moyens de guidage (21).

3. Dispositif selon la revendication 2, caractérisé en ce que les moyens de guidage (21) sont fixés à des bras de maintien (24), qui sont guidés, chacun dans un guidage à glissement (25) associe de façon fixe dans patin d'application (6), de manière à pouvoir coulisser dans le plan du couteau à retirer la peau (17), et se trouve en engagement avec un chemin incurvé (27) fixe avec le bâti.

4. Dispositif selon l'une des revendications 2 à 3, caractérisé en ce que le pivotement du patin d'application (6) s'effectue grâce à son entraînement avec blocage par serrage, lors de l'entrée de la peau à retirer dans l'interstice (8) entre la surface d'application (7) du patin d'application (6) et la surface d'enveloppe (4) du rouleau d'entraînement de la peau (3).

5. Dispositif selon la revendication 4, caractérisé en ce que le patin d'application (6) est soutenu à l'encontre de la direction d'entraînement, par un ressort (12) réglable.
